# EUROPEAN PATENT APPLICATION

(11) **EP 4 832 071 A1**
(43) Date of publication of application: **28.10.2026**
(21) Application number: 26173576.5
(22) Date of filing: 21.04.2026
(51) Int. Cl.: H01M 4/131, H01M 4/36, H01M 4/58, H01M 4/62, H01M 4/505, H01M 4/525, H01M 10/052, H01M 4/02

(54) **POSITIVE ELECTRODE ACTIVE MATERIALS, POSITIVE ELECTRODES INCLUDING THE POSITIVE ELECTRODE ACTIVE MATERIALS, AND RECHARGEABLE LITHIUM BATTERIES INCLUDING THE POSITIVE ELECTRODE ACTIVE MATERIALS**

(30) Priority: 24.04.2025 KR 20250053789
(71) Applicant: SAMSUNG SDI CO., LTD., Yongin-si, Gyeonggi-do 17084 (KR)
(72) Inventor: Ji, Seorin, 17084 Yongin-si, Gyeonggi-do (KR); Kim, Jinyoung, 17084 Yongin-si, Gyeonggi-do (KR); Lee, Jongjin, 17084 Yongin-si, Gyeonggi-do (KR); Hwang, Hoseong, 17084 Yongin-si, Gyeonggi-do (KR); Kim, Teayeop, 17084 Yongin-si, Gyeonggi-do (KR)
(74) Representative: Meissner Bolte Partnerschaft mbB

(57) **Abstract**

A positive electrode active material includes core particles that include a lithium transition metal composite oxide and are in a form of secondary particles that are formed by agglomerations of primary particles. A carbon coating layer is formed on surfaces of the core particles. The positive electrode active material has a particle strength of greater than or equal to about 160 MPa.

## Description

### BACKGROUND

### 1. Field

Positive electrode active materials, positive electrodes including the positive electrode active materials, and rechargeable lithium batteries including the positive electrode active materials are disclosed.

### 2. Description of the Related Art

Portable information devices such as cell phones, laptop computers, smart phones, and the like use rechargeable lithium batteries that have high energy density and easy portability. Research has been actively conducted in the use of rechargeable lithium batteries with high energy density as a driving power source for hybrid or electric vehicles or power storage power source.

Such rechargeable lithium batteries require a high plate density. To achieve high plate density, a compression process is performed during the manufacturing of the electrode plate. But there is a problem that cracks in the active material in the plate are induced during the compression process, which impairs electrochemical characteristics.

### SUMMARY

Provided is a positive electrode active material capable of improving particle strength while alleviating cracks in the active material that occur during compression, a positive electrode including the positive electrode active material, and a rechargeable lithium battery including the positive electrode active material.

The present invention provides a positive electrode active material that includes core particles that include a lithium transition metal composite oxide and are in a form of secondary particles that are formed by agglomerations of primary particles; and a carbon coating layer on surfaces of the core particles, wherein the positive electrode active material has a particle strength of greater than or equal to about 160 MPa.

The present invention further provides a positive electrode including a current collector, and a positive electrode active material layer disposed on the current collector and including the positive electrode active material.

The present invention also provides a rechargeable lithium battery including the positive electrode; a negative electrode; and an electrolyte.

The positive electrode active material may have improved particle strength and lubrication degree of particle surfaces, and cracks occurring during compression may be prevented.

Because the positive electrode according to the invention includes the positive electrode active material, the density of the electrode plate may be improved and the pores within the electrode plate may be reduced.

A rechargeable lithium battery according to the invention may improve capacity and energy density and may have a long cycle-life because it includes the positive electrode active material.

### BRIEF DESCRIPTION OF THE DRAWINGS

FIGS. 1 to 4 are views of rechargeable lithium batteries according to embodiments.
FIG. 5 is a scanning electron microscope image of the positive electrode active material prepared in Example 1.
FIG. 6 is a scanning electron microscope image of the positive electrode active material prepared in Comparative Example 3.
FIG. 7 is a scanning electron microscope image of the positive electrode active material prepared in Comparative Example 4.
FIG. 8 is a scanning electron microscope image of a cross-section of the positive electrode made in Example 1.
FIG. 9 is a scanning electron microscope image of a cross-section of the positive electrode made in Example 2.
FIG. 10 is a scanning electron microscope image of a cross-section of the positive electrode made in Comparative Example 1.
FIG. 11 is a scanning electron microscope image of a cross-section of the positive electrode made in Comparative Example 2.
FIG. 12 is a scanning electron microscope image of a cross-section of the positive electrode made in Comparative Example 3.
FIG. 13 is a scanning electron microscope image of a cross-section of the positive electrode made in Comparative Example 4.

### DETAILED DESCRIPTION

Hereinafter, specific embodiments will be described in detail so that those of ordinary skill in the art can easily implement them. However, this disclosure may be embodied in many different forms and is not limited to the example embodiments set forth herein.

The terminology used herein is used to describe embodiments only, and is not intended to limit the present disclosure. The singular expression includes the plural expression unless the context clearly dictates otherwise.

"Combination thereof" means a mixture, a laminate, a composite, a copolymer, an alloy, a blend, a reaction product, and the like of the constituents.

It should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

"Layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D₅₀) of particles having a cumulative volume of 50 volume% in the particle size distribution. As used herein, when a definition is not otherwise provided, the average particle diameter means a diameter (D₅₀) of particles having a cumulative volume of 50 volume% in the particle size distribution that is obtained by measuring the size (diameter or long axis length) of about 20 particles at random in a scanning electron microscope image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

### Positive Electrode Active Material

A positive electrode active material according to the invention includes core particles including a lithium transition metal composite oxide and being in a form of secondary particles formed by agglomeration of a plurality of primary particles. The positive electrode active material includes a carbon coating layer on surfaces of the core particles. And the positive electrode active material has a particle strength of greater than or equal to about 160 MPa.

In general, there is a disadvantage that electronic or ionic conductivity is reduced due to the pores within the positive electrode. To solve such a problem and achieve high electrode plate density, a compression process is performed during the manufacture of the positive electrode. But there is a problem that cracks are induced in the positive electrode active material during the compression process. In particular, in the case of a positive electrode active material in the form of a secondary particles that are formed by agglomeration of plurality of primary particles, cracking of the positive electrode active material occurs more severely during the compression process because the particle strength is weak.

The positive electrode active material according to the invention has a high particle strength of greater than or equal to about 160 MPa because it includes core particles and a carbon coating layer on the surfaces of the core particles. Accordingly, cracks in the active material that occur during the compression of the positive electrode may be alleviated and the compression process may be performed at a higher pressure.

Also, because the positive electrode active material has a high surface lubrication degree, the positive electrode active material has a sliding effect even when there is contact between the positive electrode active materials, external pressure, or external force. Accordingly, even if compression is performed at high pressure during the manufacture of the positive electrode, the impact applied to the active material is cushioned and the compression efficiency of the positive electrode increases.

Thus, because the positive electrode active material has high particle strength and surface lubrication degree, a compression process may be performed at high pressure and the active material may be protected from the compression process. Accordingly, the positive electrode including the positive electrode active material may have reduced pores and further improve the mixture density of the positive electrode. And the rechargeable lithium battery may have improved capacity and energy density, and the rechargeable lithium battery may have a long cycle-life because deterioration is delayed.

Hereinafter, a configuration of the positive electrode active material according to some embodiments is described in detail.

### Core Particles

The core particles include a lithium transition metal composite oxide and is in a form of secondary particles that are formed by agglomeration of a plurality of primary particles.

The lithium transition metal composite oxide of the core particles may include a lithium nickel-based oxide, a lithium cobalt-based oxide, a lithium manganese-based oxide, a lithium iron phosphate-based compound, a cobalt-free lithium nickel-manganese-based oxide, a lithium-manganese-rich composite oxide, or a combination thereof.

For example, the lithium transition metal composite oxide of the core particles may be a compound represented by any one of the following chemical formulas: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}O_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8). In these chemical formulas, A is Ni, Co, Mn, or a combination thereof; X is Al, Ni, Co, Mn, Cr, Fe, Mg, Sr, V, rare-earth element, or a combination thereof; D is F, S, P, or a combination thereof; G is Al, Cr, Mn, Fe, Mg, La, Ce, Sr, V, or a combination thereof; and L¹ is Mn, Al, or a combination thereof.

In some examples, the lithium transition metal composite oxide of the core particles may include a lithium nickel-based composite oxide represented by Chemical Formula 1 below, a lithium cobalt-based oxide represented by Chemical Formula 2 below, a lithium iron phosphate-based compound represented by Chemical Formula 3 below, a cobalt-free lithium nickel-manganese-based oxide represented by Chemical Formula 4 below, or a combination of Chemical Formulas 1-4.

[Chemical Formula 1] Liₐ₁Niₓ₁M¹_{y1}M²_{z1}O_{2-b1}X_{b1}

In Chemical Formula 1, 0.9≤a1≤1.2, 0.3≤x1<1, 0<y1≤0.7, 0≤z1≤0.7, 0.9≤x1+y1+z1≤1.1, and 0≤b1≤0.1, M¹ and M² are each independently one or more elements of Al, B, Ba, Ca, Ce, Co, Cr, Cu, Fe, Mg, Mn, Mo, Nb, Si, Sn, Sr, Ti, V, Y, W, and Zr, and X is one or more of F, P, and S.

[Chemical Formula 2] Liₐ₂Coₓ₂M³_{y2}O_{2-b2}X_{b2}

In Chemical Formula 2, 0.9≤a2≤1.8, 0.7≤x2≤1, 0≤y2≤0.3, 0.9≤x2+y2≤1.1, and 0≤b2≤0.1, M³ is one or more elements of Al, B, Ba, Ca, Ce, Cr, Cu, Fe, Mg, Mn, Mo, Ni, Se, Si, Sn, Sr, Ti, V, W, Y, Zn, and Zr, and X is one or more of F, P, and S.

[Chemical Formula 3] Liₐ₃Feₓ₃M⁴_{y3}PO_{4-b3}X_{b3}

In Chemical Formula 3, 0.9≤a3≤1.8, 0.6≤x3≤1, 0≤y3≤0.4, and 0≤b3≤0.1, M⁴ is one or more elements of Al, B, Ba, Ca, Ce, Co, Cr, Cu, Mg, Mn, Mo, Ni, Se, Si, Sn, Sr, Ti, V, W, Y, Zn, and Zr, and X is one or more of F, P, and S.

[Chemical Formula 4] Liₐ₄Niₓ₄Mn_{y4}M⁵_{z4}O_{2-b4}X_{b4}

In Chemical Formula 4, 0.9≤a4≤1.8, 0.8≤x4<1, 0<y4≤0.2, 0≤z4≤0.2, 0.9≤x4+y4+z4≤1.1, and 0≤b4≤0.1, M⁵ is one or more elements of Al, B, Ba, Ca, Ce, Cr, Fe, Mg, Mo, Nb, Si, Sn, Sr, Ti, V, W, Y, and Zr, and X is one or more of F, P, and S.

When the lithium transition metal composite oxide of the core particles may include a lithium nickel-based composite oxide represented by Chemical Formula 1, a rechargeable lithium battery with high capacity and high energy density may be implemented.

In some examples, the lithium transition metal composite oxide of the core particles may include a compound represented Chemical Formula 5 or Chemical Formula 6.

[Chemical Formula 5] Liₐ₅Niₓ₅Co_{y5}M⁶_{z5}O_{2-b5}X_{b5}

In Chemical Formula 5, 0.9≤a5≤1.2, 0.8≤x5<1, 0<y5≤0.2, 0≤z5≤0.2, 0.9≤x5+y5+z5≤1.1, and 0≤b5≤0.1, M⁶ is one or more elements of Al, B, Ba, Ca, Ce, Cr, Cu, Fe, Mg, Mn, Mo, Nb, Si, Sn, Sr, Ti, V, W, Y, Zn, and Zr, and X is one or more of F, P, and S.

In Chemical Formula 5, 0.9≤x5≤0.99, 0.01≤y5≤0.1, and 0≤z5≤0.1.

[Chemical Formula 6] Liₐ₆Niₓ₆Co_{y6}M⁷_{z6}M⁸_{w6}O_{2-b6}X_{b6}

In Chemical Formula 6, 0.9≤a6≤1.2, 0.8≤x6≤0.98, 0.01≤y6≤0.19, 0.01≤z6≤0.19, 0≤w6≤0.19, 0.9≤x6+y6+z6+w6≤1.1, and 0≤b6≤0.1, M⁷ is one or more elements of Al, Mn, or a combination thereof, M⁸ is one or more of B, Ba, Ca, Ce, Cr, Cu, Fe, Mg, Mo, Nb, Si, Sn, Sr, Ti, V, W, Y, Zn, and Zr, M⁷ and M⁸ are different from each other, and X is one or more elements of F, P, and S. In further embodiments of Chemical Formula 6, 0.9≤x6≤0.98, 0.01≤y6≤0.09, 0.01≤z6≤0.09, and 0≤w6≤0.09.

Nickel may be included in the lithium transition metal composite oxide of the core particles in an amount of greater than or equal to about 80 mol%, for example, greater than or equal to about 85 mol%, greater than or equal to about 90 mol%, greater than or equal to about 91 mol%, or greater than or equal to about 94 mol%, and less than or equal to about 99 mol%, based on 100 mol% of a total metal excluding lithium. In this case, the core particles may be a high-nickel positive electrode active material. Because high-nickel positive electrode active material may achieve high capacity, high capacity and high density in rechargeable lithium batteries may be implemented in such embodiments.

The core particles are in the form of secondary particles formed by closely cohering primary particles. The secondary particles may be spherical, ellipsoidal, polyhedral, or irregularly shaped, and the primary particles forming the secondary particles may be spherical, ellipsoidal, plate-shaped, or a combination thereof.

An average particle diameter (D₅₀) of the secondary particles in the core particles may be about 6 µm to about 25 µm, for example, about 6 µm to about 23 µm, about 7 µm to about 20 µm, or about 8 µm to about 15 µm. An average particle diameter (D₅₀) of the primary particles forming the secondary particles may be about 10 nm to about 1 µm, for example, about 10 nm to about 800 nm, about 20 nm to about 500 nm, or about 50 nm to about 200 nm. Here, the average particle diameter (D₅₀) of the secondary particles may be obtained by randomly selecting about 20 particles from a scanning electron microscope image of the secondary particles, measuring their particle diameters (diameter, long diameter, or long axis length) to obtain a particle size distribution, and then taking the size of particles having a cumulative volume of 50 vol% from the particle size distribution as the average particle diameter. The average particle diameter (D₅₀) of the primary particles forming the secondary particles may be obtained by measuring the sizes of about 30 primary particles in an electron microscope image of the surface or cross-section of the secondary particles and taking the diameter of the particles having a cumulative volume of 50 vol% from the particle size distribution as the average particle diameter.

A porosity of the secondary particles may be about 2% to about 20%. Here, the porosity is an area ratio of the portion occupied by pores within the particle measured using an image analysis program such as Image J in a scanning electron microscope image of a cross-section of a secondary particle.

### Carbon Coating Layer

The carbon coating layer is disposed on the surfaces of the core particles and may improve the particle strength of the positive electrode active material and the lubrication degree of the particle surfaces. Accordingly, cracks in the positive electrode active material that would otherwise occur during the compression of the positive electrode may be alleviated, and the compression process may be performed at a higher pressure.

Because of the carbon coating layer, even if a small amount of binder and conductive material is used in the manufacture of the positive electrode, adhesive strength and conductivity with the electrode plate can be secured. As the amount of the binder or conductive material decreases, the amount of the positive electrode active material may increase such that the rechargeable lithium battery can exhibit high capacity and high energy density characteristics.

The carbon coating layer may include graphene having a layered structure of 50 layers or less. Technologies have been proposed to coat the surfaces of particles with amorphous carbon for use as positive electrode active materials, but uniform coating is difficult and there are limitations with respect to the particle strength of the active material and the lubrication degree of the particle surfaces. According to embodiments of the present disclosure, because a positive electrode active material includes a carbon coating layer including crystalline carbon formed in a two-dimensional plane, and the carbon coating layer is formed in a uniform film shape having a thickness of several to several tens of nanometers, a higher mixture density of the electrode plate can be realized compared to cases where an amorphous carbon is provided. Accordingly, the electronic conductivity and ionic conductivity of the positive electrode may be improved, the energy density may be increased while the resistance is lowered, and better electrochemical performance may be realized.

The layered structure of 50 layers or less can be expressed as a layered structure of 50 atomic layers or less. For example, the carbon coating layer may include graphene having a layered structure of 2 to 50 layers, 2 to 48 layers, 5 to 45 layers, 7 to 40 layers, or 10 to 35 layers. The number of layers in the layered structure may be measured from high-resolution transmission electron microscopy (HR-TEM) images of the positive electrode active material particles.

The interlayer spacing (d₀₀₂) of the layered structure may be about 0.320 nm to about 0.350 nm, for example, about 0.325 nm to about 0.348 nm, about 0.328 nm to about 0.345 nm, or about 0.330 nm to about 0.342 nm. When the interlayer spacing (d₀₀₂) of the layered structure is in these ranges, the particle strength and particle surface lubrication degree of the positive electrode active material may be improved, and the density of the positive electrode active material layer may be maximized. Here, the interlayer spacing (d₀₀₂) may be measured by a method known to those skilled in the art. For example, the interlayer spacing (d₀₀₂) of the layered structure may be measured by obtaining the peak of the (002) plane through X-ray diffraction (XRD) of the carbon coating layer and then analyzing the peak of the (002) plane. Here, the (002) plane represents the range of 25.0° < 20 < 27.0°, where 2θ represents the diffraction angle. For example, XRD measurement data may be subjected to noise removal (baseline setting), and the like, using a conventional program equipped in the XRD device as a data processing and analysis program. Additionally, the peak profile of the peak on the (002) plane may be fitted with a conventional fitting function such as a Gaussian function, a Lorenz function, and the like. In addition, the interlayer spacing (d₀₀₂) of the layered structure may be expressed by a method of measuring the interlayer spacing (d₀₀₂) of plate-like carbon material, and the interlayer spacing (d₀₀₂) of plate-like carbon material may be measured through XRD analysis of the plate-like carbon material. The number of layers in the layered structure, the interlayer spacing (d₀₀₂), and the thickness of the coating layer are determined as average values obtained from measurements at multiple randomly selected locations on the cross-section of the core particles via HR-TEM. It is noted that the correlation between these parameters follows the physical characteristics of the graphene coating, where the total thickness of the coating layer is the product of the number of layers and the average interlayer spacing.

In the carbon coating layer, the graphene may be derived from a plate-like carbon material. The plate-like carbon material may be expressed as a sheet-type carbon material or a 2D carbon material, and may include, for example, crystalline carbon. For example, the plate-like carbon material may include graphene, graphite, or a combination thereof, and may be, for example, particulate graphite. The graphene of the carbon coating layer may be derived from particulate graphite. In such embodiments, the carbon coating layer has a layered structure exhibiting a dense crystal structure, includes crystalline carbon formed in a two-dimensional plane on the surface of the core particles, and may have a thin and uniform thickness. Accordingly, the particle strength and a lubrication degree of particle surfaces of the positive electrode active material may be further improved. Further, the mixture density of the positive electrode, the electronic conductivity of the positive electrode, and the interfacial resistance may be improved, the intercalation and deintercalation of lithium ions may be more effective, and the ionic conductivity may be improved because the lithium ions may diffuse along the layered structure.

The average size (D₅₀) of the plate-like carbon material may be less than or equal to about 2.5 µm, for example, less than or equal to about 1.5 µm, less than or equal to about 1.0 µm, less than 1 µm, less than or equal to about 0.5 µm, greater than or equal to about 0.01 µm, greater than or equal to about 0.05 µm, or greater than or equal to about 0.08 µm, and may be about 10 nm to about 1,000 nm, about 30 nm to about 950 nm, or about 50 nm to about 900 nm. When the average size of the plate-like carbon material is in these ranges, a carbon coating layer may be formed with a uniform thickness on the surfaces of the core particles, and the particle strength and the lubrication degree of the particle surfaces of the positive electrode active material may be maximized. Here, the average size (D₅₀) of the plate-like carbon material may be measured using a particle size analyzer, and the average size (D₅₀) refers to the size of particles having a cumulative volume of 50 vol% in the particle size distribution. Also, the particle size here may mean a length of the longest axis in the plane direction perpendicular to the thickness direction in the plate shape.

The thickness of the plate-like carbon material may be less than or equal to about 1.0 µm, for example, less than about 1 µm, less than or equal to about 0.9 µm, less than or equal to about 0.7 µm, or less than or equal to about 0.5 µm, greater than or equal to about 0.01 µm, greater than or equal to about 0.05 µm, or greater than or equal to about 0.08 µm, and may be about 5 nm to about 500 nm, about 5 nm to about 300 nm, or about 5 nm to about 100 nm. When the thickness of the plate-like carbon material is in these ranges, a carbon coating layer may be formed with a uniform thickness on the surfaces of the secondary particles, and the particle strength and the lubrication degree of the particle surfaces of the positive electrode active material, and the density of the positive electrode active material layer may be maximized. Here, the thickness of the plate-like carbon material may be measured through scanning electron microscope (SEM) or transmission electron microscope (TEM) images of the plate-like carbon material particles.

The plate-like carbon material may have a ratio of the length of the long axis in the plane direction to the thickness in the plate-shaped structure of 2 to 1000, for example, 2 to 800, 2 to 500, or 2 to 50. When the ratio of the length of the long axis in the plane direction to the thickness of the plate-like carbon material is in these ranges, a carbon coating layer may be formed with a uniform thickness on the surfaces of the core particles, and the particle strength and the lubrication degree of the particle surfaces of the positive electrode active material may be maximized. Here, the ratio of the length of the long axis in the plane direction to the thickness may be measured based on the electron microscope image. For example, from a SEM image of the plate-like carbon material, the thickness of the plate-like carbon material may be measured, and the length of the longest axis in the plane direction orthogonal to the thickness direction may be measured to calculate the ratio. The thickness and long axis length of the plate-like carbon material may mean an arithmetic mean of each value obtained through image analysis of plurality of plate-like carbon materials.

The plate-like carbon material may have a ratio (I_{D}/I_{G}) of the peak intensity (I_{D}) around 1350 cm⁻¹ to the peak intensity (I_{G}) around 1580 cm⁻¹ in a Raman spectrum of about 0.05 to about 0.50, for example, about 0.05 to about 0.45, about 0.10 to about 0.45, or about 0.20 to about 0.40. When the I_{D}/I_{G} value of the plate-like carbon material is in these ranges, a carbon coating layer may be formed with a uniform thickness on the surfaces of the core particles, and the particle strength and the lubrication degree of the particle surfaces of the positive electrode active material may be maximized. For instance, the Raman spectra may be measured using a Raman spectrometer (e.g., ICRM7000 (Renishaw), etc.) under the conditions of a laser wavelength of about 632 nm and a lowest Raman shift of about 946 cm⁻¹. The peak intensity ratios described herein are obtained from peaks observed in the Raman shift range starting from the lowest Raman shift of about 946 cm⁻¹. These measurement conditions are standard in the art, and it would be within the ability of a person skilled in the art to adjust these parameters, such as laser power or exposure time, while maintaining the relative trend of the peak intensity ratios, to ensure reproducibility.

The carbon coating layer may be included, based on a total of 100 wt% of the positive electrode active material layer, in an amount of about 0.05 wt% to about 5.0 wt%, for example, about 0.1 wt% to about 5.0 wt%, about 0.2 wt% to about 5.0 wt%, about 0.2 wt% to about 3.0 wt%, about 0.2 wt% to about 2.5 wt%, about 0.2 wt% to about 2.0 wt%, about 0.2 wt% to about 1.0 wt%, or about 0.2 wt% to about 0.8 wt%. When the amount of the carbon coating layer is in these ranges, the particle strength and lubrication degree of the particle surfaces of the positive electrode active material may be improved. Even if the amount of the carbon coating layer is less than about 1 wt%, the carbon may be well coated on the surfaces of the core particles, thereby increasing the electrical conductivity of the positive electrode active material, increasing the lubrication degree, and increasing the density of the positive electrode. If the carbon coating layer includes graphene with a layered structure of 50 layers or less, an amount of graphene may be described as being the same as the amount of the carbon coating layer.

The carbon coating layer may be in a form of a continuous film or in a form of island (i.e. discontinuous islands). For example, the carbon coating layer may be in the form of a film that continuously surrounds the surfaces of the core particles. In other examples, the carbon coating layer may be in the form of shells that surround the entire surfaces of the core particles. When the carbon coating layer is formed to completely cover the surfaces of the core particles, the particle strength and the lubrication degree of the particle surfaces of the positive electrode active material may be improved. Further, the positive electrode active material may have improved structural stability without increasing resistance or decreasing capacity, and the density of the positive electrode active material layer including the positive electrode active material may be improved.

The carbon coating layer may have a ratio (I_{D}/I_{G}) of the peak intensity (I_{D}) around 1350 cm⁻¹ to the peak intensity (I_{G}) around 1580 cm⁻¹ in a Raman spectrum of about 0.15 to about 0.50, for example, about 0.15 to about 0.45, about 0.18 to about 0.45, or about 0.20 to about 0.40. When the I_{D}/I_{G} value of the carbon coating layer is in these ranges, the deterioration of the positive electrode active material may be reduced, the particle strength of the positive electrode active material may be improved, and the density of the positive electrode may be maximized. When the carbon coating layer includes graphene with a layered structure of 50 layers or less, the I_{D}/I_{G} of the graphene may be described in the same way as the I_{D}/I_{G} of the carbon coating layer.

A thickness of the carbon coating layer may be about 2 nm to about 500 nm, for example, about 2 nm to about 400 nm, about 2 nm to about 300 nm, about 3 nm to about 200 nm, about 3 nm to about 100 nm, about 4 nm to about 50 nm, about 5 nm to about 30 nm, about 5 nm to about 20 nm, or about 5 nm to about 15 nm. When the thickness of the carbon coating layer is in these ranges, the structural stability of the positive electrode active material may be improved without increasing the resistance or decreasing the capacity due to the carbon coating layer. For example, the thickness of the carbon coating layer may be measured by a cross-section of the positive electrode active material particles cut by focused ion beam (FIB) or by a TEM on the positive electrode active material particles. However, the present disclosure is not limited to such examples, and the thickness of the carbon coating layer may be measured through, for example, SEM, time-of-flight secondary ion mass spectrometry (TOF-SIMS), X-ray photoelectron spectroscopy (XPS), or energy dispersive X-ray spectroscopy (EDS) analysis, and may be measured through a TEM-EDS line profile.

A difference between the highest and lowest thicknesses of the carbon coating layer in a positive electrode active material particle may be less than or equal to about 30 nm, for example, less than or equal to about 25 nm, less than or equal to about 20 nm, or less than or equal to about 15 nm, greater than or equal to about 0.30 nm, greater than or equal to about 0.33 nm, greater than or equal to about 0.35 nm, or greater than or equal to about 0.40 nm. The difference between the highest and lowest thicknesses of the carbon coating layer in these ranges means that a carbon coating layer of uniform thickness is well formed in a film form on the surface of the positive electrode active material particle. Accordingly, the particle strength and lubrication degree of the particle surfaces of the positive electrode active material may be further improved. Here, the highest and lowest thicknesses of the carbon coating layer may be measured based on an electron microscope image of the positive electrode active material. For example, in an electron microscope image of a cross-section of the positive electrode active material particle, the thickness of the thickest part of the cross-section of the carbon coating layer may be defined as the highest thickness of the carbon coating layer, and the thickness of the thinnest part may be defined as the lowest thickness of the carbon coating layer. The thickness of the carbon coating layer may be a vertical distance from the outer surface of the core particle to the outer surface of the carbon coating layer. A SEM or a TEM may be used as an electron microscope.

The positive electrode active material may further include a carbon coating layer on the surfaces of the primary particles of the core particles. In such a case, the carbon coating layer on the surfaces of the core particles may be expressed as the first carbon coating layer, and the carbon coating layer on the surfaces of the primary particles may be expressed as the second carbon coating layer.

The second carbon coating layer on the surfaces of the primary particles may further improve the particle strength and the lubrication degree of the particle surfaces of the positive electrode active material. Accordingly, cracks in the positive electrode active material that would otherwise occur during the compression of the positive electrode may be alleviated, and the compression process may be performed at a higher pressure. Here, the second carbon coating layer on the surface of the primary particles may be described in the same way as the first carbon coating layer on the surface of the core particles described above.

The average particle diameter (D₅₀) of the positive electrode active material may be about 6 µm to about 25 µm, and may be, for example, about 9 µm to about 20 µm, about 10 µm to about 18 µm, or about 12 µm to about 16 µm. When the average particle diameter (D₅₀) of the positive electrode active material is in these ranges, the capacity, energy density, and long cycle-life characteristics may be maximized. Here, the average particle diameter (D₅₀) of the positive electrode active material may be obtained by randomly selecting about 20 particles from a SEM image of the positive electrode active material, measuring the particle diameters (diameter, long diameter, or long axis length) thereof to obtain a particle size distribution, and then taking the size of particles having a cumulative volume of 50 vol% from the particle size distribution as the average particle diameter.

The particle strength of the positive electrode active material may be greater than or equal to about 160 MPa, for example, greater than or equal to about 161 MPa, greater than or equal to about 162 MPa, greater than or equal to about 163 MPa, less than or equal to about 300 MPa, less than or equal to about 250 MPa, less than or equal to about 200 MPa, or less than or equal to about 190 MPa, and may be about 160 MPa to about 300 MPa, about 160 MPa to about 245 MPa, or about 160 MPa to about 190 MPa. When the particle strength of the positive electrode active material is in these ranges, fewer cracks may occur in the particle and the density of the positive electrode active material layer may be improved. Here, the particle strength of the positive electrode active material may be measured by placing the active material particles on a plate, increasing the compressive force using a particle strength meter, and measuring a force when the particles are destroyed, which is then used as the particle strength value. Additionally, the particle strength may be obtained by randomly selecting about 20 active material particles, measuring their particle strengths, and then taking the average value.

### Method of Preparing Positive Electrode Active Material

A method of preparing a positive electrode active material according to the invention includes preparing core particles including a lithium transition metal composite compound; preparing a plate-like carbon material having an average size (D₅₀) of less than or equal to about 2.5 µm; and dry mixing the core particles and the plate-like carbon material to obtain a positive electrode active material.

In the method of preparing a positive electrode active material according to the invention, a carbon coating layer including graphene with a layered structure of 50 layers or less may be formed on the surfaces of core particles using the plate-like carbon material. Accordingly, the particle strength and lubrication degree of the particle surfaces of the positive electrode active material may be improved while minimizing the manufacturing cost. Furthermore, the method of preparing the positive electrode active material may provide a positive electrode active material that may secure adhesive strength and conductivity with the electrode plate even when using a small amount of binder and conductive material during the making of the positive electrode. In addition, as the amount of the binder used in the making of the positive electrode decreases, the amount of the positive electrode active material may increase, so that a rechargeable lithium battery including the positive electrode active material may exhibit high capacity and high energy density characteristics.

Hereinafter, a method for preparing a positive electrode active material according to the invention is described in detail.

### Preparing Core Particles

Core particles including a lithium transition metal composite compound may be prepared. The core particles may have the properties described above in the aforementioned positive electrode active material.

### Preparing Plate-like Carbon Material

A plate-like carbon material having an average size (D₅₀) of less than or equal to about 2.5 µm can be prepared. The specific properties of the plate-like carbon material, such as average size, and I_{D}/I_{G} values, may be the same as in the plate-like carbon material and positive electrode active material described above.

In the preparation process, a raw material having an average size (D₅₀) of about 3 µm to about 25 µm may be pulverized to prepare a plate-like carbon material having an average size (D₅₀) of less than or equal to about 2.5 µm. The raw material may include graphene, graphite, or a combination thereof. The average size (D₅₀) of the raw material may be less than or equal to about 20 µm, less than or equal to about 18 µm, less than or equal to about 15 µm, less than or equal to about 12 µm, less than or equal to about 10 µm, greater than or equal to about 3.5 µm, greater than or equal to about 4 µm, or greater than or equal to about 4.5 µm. Here, the average size of the raw material may be measured from a SEM image. The average size (D₅₀) of the raw material may be measured through a particle size analyzer and refers to the size of particles having a cumulative volume of 50 vol% in the particle size distribution. Also, the particle size here may mean a length of the longest axis in the plane direction perpendicular to the thickness direction in the plate shape.

The raw material may have a ratio (I_{D}/I_{G}) of the peak intensity (I_{D}) around 1350 cm⁻¹ to the peak intensity (I_{G}) around 1580 cm⁻¹ in a Raman spectrum of greater than or equal to about 0.01 and less than about 0.15, for example, about 0.02 to about 0.14, about 0.08 to about 0.14, or about 0.1 to about 0.14.

The pulverizing of the raw material may be performed, for example, using a milling process. The milling process may be a method known to those skilled in the art, and, for example, may use a device such as a ball mill, a bead mill, a jet mill, a pin mill, a roller mill, a hybrid mill, a colloid mill, or an air classifier mill (ACM).

The raw material may be pulverized using a ball milling method. The ball milling may be performed using zirconia beads having a size of about 1 mm to about 25 mm at a speed of about 200 rpm to about 5,000 rpm for about 5 minutes to about 4 hours. The size of the zirconia beads used for pulverizing the raw material may be about 1.2 mm to about 23 mm, about 1.3 mm to about 21 mm, or about 1.5 mm to about 20 mm. The pulverizing of the raw material may be performed under conditions of about 250 rpm to about 4,500 rpm, about 300 rpm to about 4,000 rpm, about 400 rpm to about 3,000 rpm, or about 600 rpm to about 2,000 rpm. The pulverizing of the raw material may be performed for about 5 minutes to about 3 hours, or about 30 minutes to about 3 hours. When the size of the beads, the stirring speed, or the stirring time each are in these ranges, the particle size of the plate-like carbon material may be controlled to the desired level.

### Obtaining Positive Electrode Active Material

The core particles and the plate-like carbon material are mixed to prepare a positive electrode active material. In this process, crystalline carbon derived from the plate-like carbon material is coated on the surfaces of the core particles, thereby forming a carbon coating layer including graphene with a layered structure of 50 layers or less on the surfaces of the core particles. Because a carbon coating layer is formed on the surfaces of the core particles with a thin and uniform thickness, in this process the particle strength and surface lubrication degree of the positive electrode active material may be improved. Further, even when using a small amount of binder during the forming of the positive electrode, adhesive strength and conductivity with the electrode plate may be secured. Still further, as the amount of the binder used to make the positive electrode decreases, the amount of the positive electrode active material may increase so that the rechargeable lithium battery may exhibit high capacity and high energy density characteristics. The carbon coating layer formed in this process may be the same as the carbon coating layer in the positive electrode active material described above and detailed descriptions are thereof omitted.

The plate-like carbon material may be mixed, based on a total of 100 wt% of the core particles and the plate-like carbon material, in an amount of about 0.05 wt% to about 5.0 wt%, for example, about 0.1 wt% to about 5.0 wt%, about 0.2 wt% to about 5.0 wt%, about 0.2 wt% to about 3.0 wt%, about 0.2 wt% to about 2.5 wt%, about 0.2 wt% to about 2.0 wt%, about 0.2 wt% to about 1.0 wt%, or about 0.2 wt% to about 0.8 wt%. When the mixing amount of the plate-like carbon material is in these ranges, the particle strength and lubrication degree of the positive electrode active material may be improved. Even if the amount of the plate-like carbon material is less than about 1 wt%, it may be well coated on the surfaces of the core particles to thereby increase the electrical conductivity of the positive electrode active material, increase lubrication degree, and increase the density of the positive electrode.

This process may be performed at a speed of about 500 rpm to about 6,000 rpm, for example, about 600 rpm to about 5,500 rpm, about 700 rpm to about 5,000 rpm, or about 800 rpm to about 4,000 rpm. When the performance conditions are in these ranges, the particle strength and surface lubrication degree of the positive electrode active material may be improved.

This process may be performed by mixing the core particles and plate-like carbon materials and applying a shear force. In this case, a carbon coating layer including graphene having a layered structure exhibiting a dense crystal structure may be formed while crystalline carbon derived from the plate-like carbon material is provided in a two-dimensional plane on the surfaces of the core particles. This process may be performed using a device for applying shear force, for example, a device having a blade inside. But the present disclosure is not limited to such an example.

This process include mixing the core particles and the plate-like carbon material using a mixer, for example a Nobilta mixer (Hosokawa Micron B.V.). The core particles and the plate-like carbon material may be mixed at a shear rate of about 1,000 s⁻¹ to about 9,000 s⁻¹ and a blade rotation speed of less than or equal to about 20 m/s. In further embodiments, the core particles and the plate-like carbon material may be mixed at a shear rate of about 1,500 s⁻¹ to about 8,800 s⁻¹, about 2,000 s⁻¹ to about 8,800 s⁻¹, or about 2,500 s⁻¹ to about 8,500 s⁻¹. When the shear rate range is in these ranges, a carbon coating layer may be effectively formed on the surfaces of the core particles without damaging the core particles.

The rotation speed of the blade within the device applying the shear force may be less than or equal to about 18 m/s, less than or equal to about 15 m/s, or less than or equal to about 10 m/s, greater than or equal to about 3 m/s, greater than or equal to about 4 m/s, or greater than or equal to about 5 m/s. When the range of rotational speed of the blade is in these ranges, a carbon coating layer may be effectively formed on the surfaces of the core particles without damaging the core particles.

The core particles and plate-like carbon material may be dry mixed. As such, manufacturing costs may be reduced, and because the carbon coating layer is formed thinly and uniformly, the particle strength and surface lubrication degree of the positive electrode active material may be improved. Here, "dry" means a state in which there is no intentional contact with a solvent such as a process solvent, or a state in which there is no intentional inclusion of a solvent. The dry mixing may be performed using a method known to those skilled in the art, for example, a dry mixer, a homogenizer, or a Henschel mixer.

### Positive Electrode

According to the invention, a positive electrode includes a current collector. A positive electrode active material layer is disposed on the current collector and includes the aforementioned positive electrode active material. The positive electrode active material layer may further include other types of positive electrode active materials in addition to the aforementioned positive electrode active material. In such cases, the aforementioned positive electrode active material may be referred to as a first positive electrode active material, and a type of positive electrode active material other than the aforementioned positive electrode active material may be referred to as a second positive electrode active material, third positive electrode active material, etc.

The configuration of the positive electrode according to some embodiments is described in detail below.

### Second Positive Electrode Active Material

The positive electrode active material layer may include, in addition the aforementioned first positive electrode active material, a second positive electrode active material including a lithium transition metal composite oxide. The average particle diameter (D₅₀) of the first positive electrode active material may be about 6 µm to about 25 µm, and the average particle diameter (D₅₀) of the second positive electrode active material may be about 1 µm to about 8 µm. The first positive electrode active material having a relatively large average particle size may be expressed as large particles, and the second positive electrode active material having a relatively small average particle size may be expressed as small particles. Because the positive electrode active material layer includes both large and small particles, it may have a maximized capacity and energy density and also have long cycle-life characteristics.

In general, positive electrode active materials including a lithium nickel-based composite oxide have been proposed to maximize capacity and energy density and long cycle-life characteristics by mixing large and small particles. However, a positive electrode including large and small particles may experience problems such as cracks forming in the large particles or damage to its surface during the compression process. Accordingly, as the battery is repeatedly charged and discharged, the deterioration of the capacity may be accelerated, which may lead to a problem of reduced cycle-life characteristics.

The first positive electrode active material, i.e., the large particles, of the positive electrode may have high particle strength and provide good lubrication to the particle surfaces because it provides a carbon coating layer on the surfaces of the core particles formed of secondary particles. Accordingly, cracks in the large particles that would otherwise occur during the compression of the positive electrode may be alleviated, and the compression process may be performed at a higher pressure. In addition, the positive electrode including the large and small particles may have reduced pores in the electrode plate and have improved density in the positive electrode active material layer.

Because the lithium transition metal composite oxide of the second positive electrode active material may the same as the lithium transition metal composite oxide of the first positive electrode active material described above, further detailed descriptions will be omitted. For example, the type of lithium transition metal composite oxide in the second positive electrode active material may be the same as or different from the type of lithium transition metal composite oxide in the first positive electrode active material.

The second positive electrode active material may be secondary particles formed by agglomeration of a primary particles, single particles, or a combination thereof. Because the form of secondary particles is as described above, further detailed descriptions will be omitted.

When the second positive electrode active material is in a form of single particles, the second positive electrode active material may have various shapes such as a polyhedral, spherical, ellipsoidal, plate-shaped, rod-shaped, or irregular shape. Here, the single particles exist alone without a grain boundary within the particle, be composed of one particle, and may be a single particle, a monolith structure, a one body structure, or a non-agglomerated particle, in which particles are not agglomerated with each other but exist as an independent phase in terms of morphology. The single particles may be expressed as single crystals.

The average particle diameter (D₅₀) of the second positive electrode active material may be about 1 µm to about 8 µm, and may be, for example, about 1 µm to about 7.5 µm, about 1 µm to about 7 µm, or about 1 µm to about 6 µm. When the average particle diameter (D₅₀) of the second positive electrode active material is in these ranges, the capacity, energy density, and long cycle-life characteristics may be maximized. Here, the average particle diameter (D₅₀) of the second positive electrode active material may be obtained by randomly selecting about 20 particles from an SEM image of the second positive electrode active material, measuring the particle diameters (diameter, long diameter, or long axis length) to obtain a particle size distribution, and then taking the size of particles having a cumulative volume of 50 vol% from the particle size distribution as the average particle diameter.

The second positive electrode active material may include particles including a lithium transition metal composite oxide and a carbon coating layer on the surfaces of the particles. In such a case, the particle strength and the lubrication degree of the particle surfaces of the second positive electrode active material may be improved. The carbon coating layer of the second positive electrode active material may include graphene having a layered structure of 50 layers or less, and the graphene may be derived from a plate-like carbon material. Because these details are the same as described above, further detailed descriptions will be omitted.

The positive electrode active material layer may include, based on a total of 100 wt% of the first positive electrode active material and the second positive electrode active material, about 20 wt% to about 95 wt%, for example, about 30 wt% to about 90 wt%, about 45 wt% to about 85 wt%, or about 60 wt% to about 80 wt% of the first positive electrode active material, and may include about 5 wt% to about 80 wt% for example, about 10 wt% to about 70 wt%, about 15 wt% to about 55 wt%, or about 20 wt% to about 40 wt% of the second positive electrode active material. When the amounts of the first positive electrode active material and the second positive electrode active material are in these ranges, the capacity and mixture density of the positive electrode may be improved, and the energy density of the rechargeable lithium battery may be further improved.

### Current Collector

The current collector is not limited as long as it is conductive and does not cause undesirable chemical changes to the positive electrode and the rechargeable lithium battery including the positive electrode. For example, the current collector may include a thin film of aluminum (Al), stainless steel (SUS), indium (In), magnesium (Mg), titanium (Ti), iron (Fe), cobalt (Co), nickel (Ni), zinc (Zn), germanium (Ge), lithium (Li), or a combination thereof, and may include for example an aluminum thin film.

The current collector may be various shapes and forms such as a plate, a thin body, a film, a sheet, a foil, a net, a porous body, a foam body, or a non-woven body. In some examples, the current collector may include microscopic irregularities on its surface, which may improve adhesive strength to the positive electrode active material.

A thickness of the current collector may be about 1 µm to about 20 µm, for example about 5 µm to about 15 µm, or about 7 µm to about 15 µm.

In addition to the aforementioned positive electrode active material, the positive electrode active material layer may further include a binder, a conductive material, or a combination thereof.

### Binder

The binder serves to adhere the positive electrode active material particles to each other and to adhere the positive electrode active material to the current collector. The binder may include, for example, one or more of polyvinyl alcohol, carboxymethylcellulose, hydroxypropylcellulose, diacetylcellulose, polyvinyl chloride, carboxylated polyvinyl chloride, polyvinyl fluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon. But the present disclosure is not limited to these examples.

In the positive electrode active material layer, the binder may be included, based on a total of 100 wt% of the positive electrode active material layer, in an amount of about 0.1 wt% to about 5 wt%, for example, about 0.5 wt% to about 4 wt%, or about 1 wt% to about 3 wt%. For example, the binder may be included in an amount of about 0.1 wt% to about 1 wt%, for example, less than about 1.0 wt%, or less than or equal to about 0.9 wt% based on a total of 100 wt% of the positive electrode active material layer. Because the positive electrode active material layer includes the aforementioned first positive electrode active material, it can exhibit excellent electronic conductivity, have low resistance, and have high positive electrode density even if it does not include a separate binder or includes a very small amount of binder.

### Conductive Material

A conductive material is used to provide conductivity to an electrode, and any material that does not cause undesirable chemical changes and is electronically conductive may be used in the battery. For example, the conductive material may include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

In the positive electrode active material layer, the conductive material may be included, based on a total of 100 wt% of the positive electrode active material layer, in an amount of about 0.05 wt% to about 5 wt%, for example, about 0.5 wt% to about 4 wt%, or about 1 wt% to about 3 wt%. For example, the conductive material may be included in an amount of about 0.05 wt% to about 1 wt%, for example, less than about 1.0 wt%, less than or equal to about 0.8 wt%, less than or equal to about 0.7 wt%, or less than or equal to about 0.5 wt% based on a total of 100 wt% of the positive electrode active material layer. Because the positive electrode active material layer includes the aforementioned first positive electrode active material, it can exhibit excellent electronic conductivity and have low resistance and high positive electrode density even if positive electrode active material does not include a separate conductive material or includes a very small amount of conductive material.

A density of the positive electrode active material layer may be greater than or equal to about 3.3 g/cc, and may be, for example, about 3.3 g/cc to about 5.0 g/cc, about 3.5 g/cc to about 4.8 g/cc, about 3.8 g/cc to about 4.5 g/cc, or about 3.82 g/cc to about 4.5 g/cc. When the density of the positive electrode active material layer is in these ranges, the energy density of the rechargeable lithium battery may be improved. For example, because the positive electrode active material included in the positive electrode active material layer has high particle strength and lubrication degree, a compression process may be performed at a higher pressure during the formation of the positive electrode. In addition, because the lubrication degree of the surface of the positive electrode active material is high, the compression efficiency of the positive electrode may be increased by a sliding effect. Further, because the compression process may be performed at a higher pressure, the pores of the electrode plates in the positive electrode active material layer may be reduced, and the density of the positive electrode active material layer may be further improved. Here, the density of the positive electrode active material layer means the ratio of the weight to the volume of the positive electrode active material layer in the compressed positive electrode. The density of the positive electrode active material layer may be obtained by measuring a cross-sectional area, thickness, and weight of the positive electrode active material layer excluding the positive electrode current collector, calculating the volume by multiplying the cross-sectional area and thickness, and dividing the weight by the volume.

An adhesive strength of the positive electrode active material layer to the current collector may be greater than or equal to about 0.5 gf/mm. The resistivity of the positive electrode active material layer may be less than or equal to about 40 Ω·cm. For example, the adhesive strength of the positive electrode active material layer to the current collector may be greater than or equal to about 1.1 gf/mm, greater than or equal to about 1.5 gf/mm, greater than or equal to about 2.0 gf/mm, or greater than or equal to about 2.5 gf/mm, less than or equal to about 30 gf/mm, less than or equal to about 28 gf/mm, less than or equal to about 25 gf/mm, or less than or equal to about 23 gf/mm. The resistivity of the positive electrode active material layer may be less than or equal to about 35 Ω·cm, less than or equal to about 30 Ω·cm, less than or equal to about 25 Ω·cm, less than or equal to about 20 Ω·cm, greater than or equal to about 0.5 Ω·cm, greater than or equal to about 1.0 Ω·cm, greater than or equal to about 3.0 Ω·cm, greater than or equal to about 5.0 Ω·cm, or greater than or equal to about 5.5 Ω·cm. Because the positive electrode active material layer includes the aforementioned positive electrode active material, the positive electrode active material layer can exhibit excellent electronic conductivity and have low resistance even if it does not include a separate conductive material or includes a very small amount of conductive material. The positive electrode active material layer may also have high electrode plate adhesive strength even if it includes a very small amount of binder.

A thickness of the positive electrode active material layer may be about 40 µm to about 300 µm, for example, about 50 µm to about 200 µm, or about 80 µm to about 150 µm. When the thickness of the positive electrode active material layer is in these ranges, high-capacity and high-energy-density battery may be achieved. The thickness of the positive electrode active material layer may be measured using a SEM image of the positive electrode cross-section. However, the present disclosure is not limited thereto, and the thickness of the positive electrode active material layer may be measured, for example, by TEM, TOF-SIMS, XPS, or EDS analysis.

A porosity of the positive electrode may be less than or equal to about 30%, less than or equal to about 25%, or less than or equal to about 20%, and greater than or equal to about 1%, greater than or equal to about 5%, or greater than or equal to about 7%. When the porosity of the positive electrode is in these ranges, the capacity and energy density of the positive electrode may be improved. Here, the porosity of the positive electrode means a ratio of the pores present within the positive electrode to a total volume of the positive electrode. The porosity may be measured, for example, by mercury porosimetry.

### Rechargeable Lithium Battery

A rechargeable lithium battery according to the invention includes a positive electrode including a current collector and a positive electrode active material layer on the current collector. The rechargeable lithium battery according to the invention includes the aforementioned positive electrode, a negative electrode, and an electrolyte. The rechargeable lithium battery may be a lithium ion battery using a liquid electrolyte, or an all-solid-state rechargeable battery or a semi-solid rechargeable battery using a solid electrolyte.

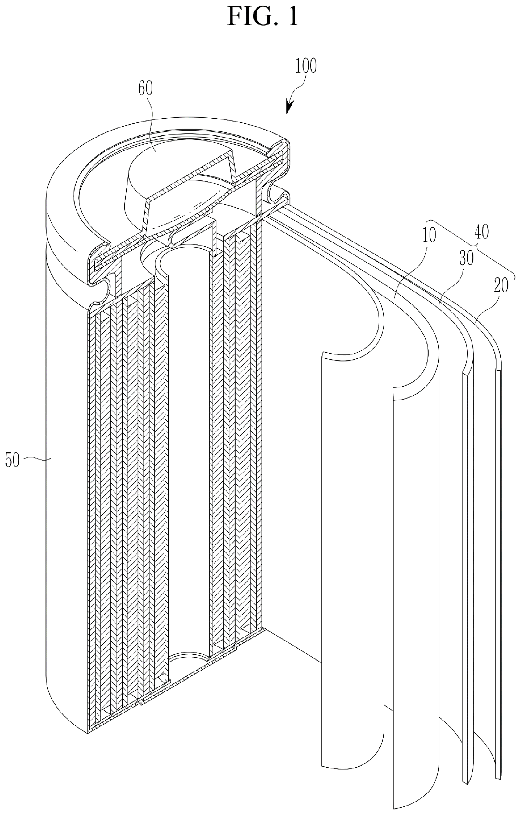

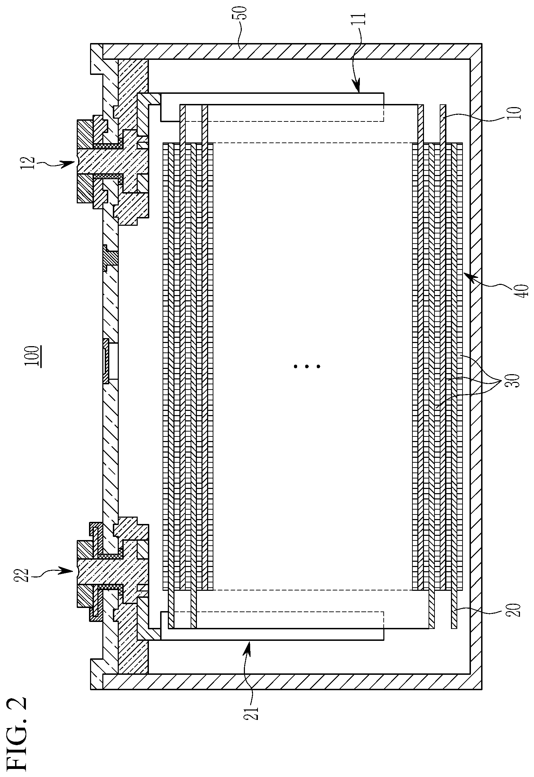

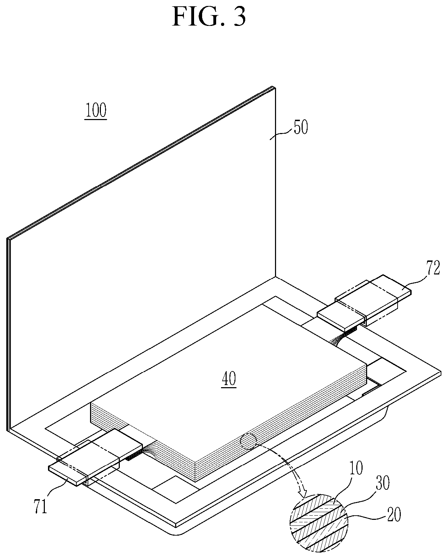

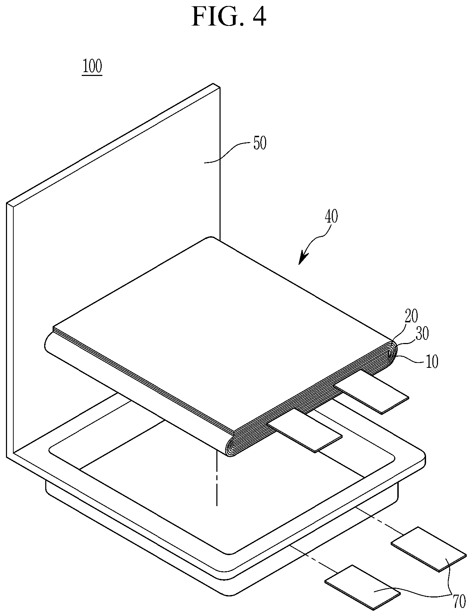

The rechargeable lithium battery may be cylindrical, prismatic, pouch-shaped, coin-shaped, etc. depending on the shape. FIGS. 1 to 4 are schematic views showing rechargeable lithium batteries according to some embodiments, where FIG. 1 is a cylindrical battery, FIG. 2 is a prismatic battery, and FIGS. 3 and 4 are a pouch-shaped battery.

Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70, that is, a positive electrode tab 71 and a negative electrode tab 72 forming an electrical path for inducing the current formed in the electrode assembly 40 to outside of the battery.

The rechargeable lithium battery according to some embodiments may be rechargeable at a high voltage or may be suitable for being driven at a high voltage. For example, the charging voltage of a rechargeable lithium battery may be greater than or equal to about 4.45 V, about 4.45 V to about 4.7 V, about 4.45 V to about 4.6 V, or about 4.45 V to about 4.55 V, and the like. By using the positive electrode active material according to embodiments of the present disclosure, an amount of gas generated in the rechargeable lithium battery can be significantly reduced even when that battery is charged at high voltage and the battery has high capacity and long cycle-life characteristics.

### Negative Electrode

The negative electrode may include a current collector and a negative electrode active material layer on the current collector. The negative electrode active material layer includes a negative electrode active material and may further include a binder, a conductive material, or a combination thereof.

### Negative Electrode Active Material

The negative electrode active material includes a material capable of reversibly intercalating/deintercalating lithium ions, lithium metal, an alloy of lithium metal, a material capable of doping and dedoping lithium, or a transition metal oxide.

The material capable of reversibly intercalating/deintercalating the lithium ions may be or include a carbon-based negative electrode active material, for example, crystalline carbon, amorphous carbon, or a combination thereof. The crystalline carbon may be irregular, sheet, flake, spherical, or fiber shaped natural graphite or artificial graphite. The amorphous carbon may be a soft carbon, a hard carbon, a mesophase pitch carbonization product, calcined coke, and the like.

As the alloy of lithium metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

The material capable of doping and dedoping lithium may be a Si-based negative electrode active material or a Sn-based negative electrode active material. The Si-based negative electrode active material may be silicon, a silicon-carbon composite, SiOₓ (0<x≤2), a Si-Q alloy, or a combination thereof. In the formula Si-Q, Q is an alkali metal, an alkaline earth metal, a Group 13 element, a Group 14 element (excluding Si), a Group 15 element, a Group 16 element, a transition metal, a rare earth element, or a combination thereof, and for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof. The Sn-based negative electrode active material may be Sn, SnO₂, a Sn-based alloy, or a combination thereof.

The silicon-carbon composite may be a composite of silicon and amorphous carbon. The average particle diameter (D₅₀) of the silicon-carbon composite particles may be, for example, about 0.5 µm to about 20 µm. According to some embodiments, the silicon-carbon composite may be in the form of silicon particles with amorphous carbon coated on the surfaces of the silicon particles. For example, silicon-carbon composite may include a secondary particle (core) formed by assembled silicon primary particles and an amorphous carbon coating layer (shell) on the surface of the secondary particles. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, calcined coke, and the like.

When the silicon-carbon composite includes silicon and amorphous carbon, based on 100 wt% of the silicon-carbon composite, an amount of the silicon may be about 10 wt% to about 50 wt% and an amount of the amorphous carbon may be about 50 wt% to about 90 wt%. When the silicon-carbon composite includes silicon, amorphous carbon, and crystalline carbon, an amount of silicon, based on 100 wt% of the silicon-carbon composite, may be about 10 wt% to about 50 wt%, an amount of crystalline carbon may be about 10 wt% to about 70 wt%, and an amount of amorphous carbon may be about 20 wt% to about 40 wt%.

A thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may be present as silicon alone, in the form of a silicon alloy, or in an oxidized form. The oxidized form of the silicon may be represented as SiOₓ (0<x≤2). The atomic content ratio of Si:O, which indicates the degree of oxidation, may be about 99:1 to about 33:67.

The Si-based negative electrode active material or Sn-based negative electrode active material may be mixed with the carbon-based negative electrode active material. When a Si-based negative electrode active material or a Sn-based negative electrode active material is used in combination with a carbon-based negative electrode active material, a weight ratio of the Si-based negative electrode active material or the Sn-based negative electrode active material to the carbon-based negative electrode active material may be about 1:99 to about 90:10.

The negative electrode active material may be included in an amount of about 80 wt% to about 99 wt, for example, about 85 wt% to about 99 wt%, or about 90 wt% to about 99 wt%% based on 100 wt% of the total negative electrode active material layer.

### Binder

The binder serves to adhere the negative electrode active material particles to each other and also to adhere the negative electrode active material to the current collector. The binder may be a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of being fiberized. The dry binder may be, for example, polytetrafluoroethylene, polyvinylidene fluoride, a polyvinylidene fluoride-hexafluoropropylene copolymer, polyethylene oxide, or a combination thereof.

The binder may be included, based on 100 wt% of the total negative electrode active material layer, in an amount of about 0.5 wt% to about 5 wt%, for example, about 0.5 wt% to about 4 wt%, or about 1 wt% to about 3 wt%.

### Conductive Material

The conductive material is included to provide electrode conductivity and any electrically conductive material may be used that does not cause an undesirable chemical change. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

The conductive material may be included, based on 100 wt% of the total negative electrode active material layer, in an amount of about 0.5 wt% to about 5 wt%, for example, about 0.5 wt% to about 4 wt%, or about 1 wt% to about 3 wt%.

### Current Collector

There is no particular limitation on the negative electrode current collector as long as it does not cause undesirable chemical changes in the negative electrode and the rechargeable lithium battery including the negative electrode. As examples, the negative electrode current collector can be a copper foil, a nickel foil, a stainless steel foil, a titanium foil, a nickel foam, a copper foam, a polymer substrate coated with a conductive metal, or a combination thereof.

The shape of the negative electrode current collector may be various shapes and forms such as a plate, a thin body, a film, a sheet, a foil, a net, a porous body, a foam body, or a non-woven body. In some examples, the negative electrode current collector may include microscopic irregularities on its surface, which may improve adhesive strength to the negative electrode active material.

A thickness of the negative electrode current collector may be about 1 µm to about 20 µm, for example, about 5 µm to about 15 µm, or about 7 µm to about 10 µm.

### Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, t-butyl acetate, methyl propionate, ethyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like.

The ketone-based solvent may include cyclohexanone, and the like. The alcohol-based solvent may include ethanol, isopropyl alcohol, and the like and the aprotic solvent may include nitriles such as R-CN, where R is a C2 to C20 linear, branched, or cyclic hydrocarbon group, and may include a double bond, an aromatic ring, or an ether group, and the like; amides such as dimethylformamide; dioxolanes such as 1,3-dioxolane, 1,4-dioxolane, and the like; sulfolanes, and the like.

The non-aqueous organic solvent may be used alone or in a mixture of two or more types. When two or more types are used in a mixture, a mixing ratio can be adjusted according to the desired battery performance, as is widely known to those working in the field.

When using a carbonate-based solvent, a cyclic carbonate and a chain carbonate may be mixed and used. The cyclic carbonate and the chain carbonate may be mixed in a volume ratio of about 1 : 1 to about 1 : 9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethylene carbonate, vinylene carbonate, or an ethylene carbonate-based compound to improve battery cycle-life.

Examples of the ethylene carbonate-based compound include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt include one or more selected from LiPF₆, LiBF₄, LiSbF₆, LiAsF₆, LiClO₄, LiAlO₂, LiAlCl₄, LiPO₂F₂, LiCl, Lil, LiN(SO₂C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within the above ranges, the electrolyte solution has appropriate ionic conductivity and viscosity. Thus, excellent performance can be achieved and lithium ions can move effectively.

### Separator

Depending on the type of rechargeable lithium battery, the rechargeable lithium battery may further include a separator positioned between the positive and negative electrodes. For example, the separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, and TEFLON^{®} (polytetrafluoroethylene), or a copolymer or mixture of two or more thereof. The porous substrate may include glass fibers, or may comprise a composite membrane of polymer and glass fibers.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, Ga₂O₃, ZnO, ZrO₂, Y₂O₃, SrTiO₃, BaTiO₃, Mg(OH)₂, boehmite, and a combination thereof. But the present disclosure is not limited to these examples. An average particle diameter (D₅₀) of the inorganic particles may be from about 1 nm to about 2000 nm, for example, about 100 nm to about 1000 nm, or about 100 nm to about 700 nm. Here, the average particle diameter (D₅₀) of the inorganic particles may be obtained by randomly selecting about 20 particles from a scanning electron microscope image of the inorganic particles, measuring their particle diameters (diameter, long diameter, or long axis length) to obtain a particle size distribution, and then taking the size of particles having a cumulative volume of 50 vol% from the particle size distribution as the average particle diameter.

The organic material and the inorganic material may be mixed in one coating layer. In other embodiments, a coating layer including an organic material and a coating layer including an inorganic material may be stacked. A thickness of the coating layer may be about 0.5 µm to about 20 µm, for example, about 1 µm to about 10 µm, or about 1 µm to about 5 µm.

The rechargeable lithium battery according to examples may be used in automobiles, mobile phones, or various types of electrical devices. But the present disclosure is not limited to these example.

Hereinafter, examples and comparative examples of the present invention are described. The following examples are merely illustrative of the present disclosure, and the present disclosure is not limited to the following examples.

### Example 1

### (1) Preparation of Positive Electrode Active Material

Flake-shaped graphite (G5 (Qingdao Luowei New Materials), average particle diameter (D₅₀): 5.0 µm) was mixed with ZrO₂ beads with a particle diameter of 2 mm, which was 10 times a weight of the flake-shaped graphite. Then, the flake-shaped graphite was milled with the beads for 1 hour under conditions of 1,000 rpm to prepare graphite particulates having an average particle diameter (D₅₀) of 0.2 µm.

After preparing core particles having a composition of LiNi_{0.91}Co_{0.05}Al_{0.01}O₂ in the form of secondary particles formed by agglomeration of a plurality of primary particles (average particle diameter (D₅₀): about 14 µm), 99.8 wt% of the core particles and 0.2 wt% of the graphite particulates were put in a dry mixer. After adjusting the mixing speed to 3,000 rpm, the core particles and the graphite particulates were dry-mixed for 10 minutes to obtain a positive electrode active material.

### (2) Positive Electrode

The prepared positive electrode active material prepared was formed as a first positive electrode active material, and a second positive electrode active material having a composition of LiNi_{0.91}Co_{0.05}Al_{0.01}O₂ in the form of single particles with an average particle diameter (D₅₀) of about 2 µm was prepared. The first positive electrode active material and the second positive electrode active material were mixed in a weight ratio of 70:30, and then, 97.7 wt% of the mixture, 1.0 wt% of carbon nanotube and carbon black as a conductive material (carbon nanotubes and carbon black in a weight ratio of 7:3), and 1.3 wt% of polyvinylidene fluoride as a binder were dispersed in an N-methylpyrrolidone (NMP) solvent to prepare a positive electrode active material slurry. The positive electrode active material slurry was coated on a 12 µm-thick aluminum substrate (current collector) and dried to form a positive electrode active material layer. The resultant was then compressed with a pressure of 25 MPa to make a positive electrode. Using SEM analysis on the compressed positive electrode, the positive electrode active material layer was found to have a thickness of about 50 µm.

### (3) Rechargeable Lithium Battery Cell

The positive electrode prepared above and lithium metal counter (negative) electrode were used to make a rechargeable lithium cell, with a separator having a polyethylene polypropylene multilayer structure interposed between positive electrode and negative electrode. The rechargeable lithium battery cell was made by a conventional method by injecting an electrolyte solution containing 1.3 M LiPF₆ lithium salt in a solvent including ethylene carbonate, propylene carbonate, and propyl propionate mixed in a volume ratio of 10:15:75.

### Example 2

A positive electrode active material, a positive electrode, and a rechargeable lithium battery cell were made in the same manner as in Example 1 except that the positive electrode active material was prepared by mixing 99.5 wt% of the core particles and 0.5 wt% of the graphite particulates in the preparation of the positive electrode active material.

### Example 3

A positive electrode active material, a positive electrode, and a rechargeable lithium battery cell were made in the same manner as in Example 1 except that the positive electrode active material was prepared by mixing 99.0 wt% of the core particles and 1.0 wt% of the graphite particulates in the preparation of the positive electrode active material.

### Example 4

A positive electrode active material, a positive electrode, and a rechargeable lithium battery cell were made in the same manner as in Example 1 except that the positive electrode active material was prepared by mixing 98.0 wt% of the core particles and 2.0 wt% of the graphite particulates in the preparation of the positive electrode active material.

### Comparative Example 1

The core particles used to prepare the positive electrode active material of Example 1 were prepared as a positive electrode active material. The prepared positive electrode active material was used to make a positive electrode and a rechargeable lithium battery cell in the same manner as in Example 1.

### Comparative Example 2

A positive electrode active material, a positive electrode, and a rechargeable lithium battery cell were made in the same manner as in Example 1 except that the positive electrode active material was prepared by mixing 0.2 wt% of the flake-shaped graphite (G5 (Qingdao Luowei New Materials), average particle diameter (D₅₀): 5.0 µm) used to prepare the graphite particulates and 99.8 wt% of the core particles in the preparation of the positive electrode active material.

### Comparative Example 3

A positive electrode active material, a positive electrode, and a rechargeable lithium battery cell were made in the same manner as in Example 1 except that the positive electrode active material was prepared by mixing carbon black (Super P by Imerys S.A.) instead of the graphite particulates with the core particles in the preparation of the positive electrode active material.

### Comparative Example 4

A positive electrode active material, a positive electrode, and a rechargeable lithium battery cell were made in the same manner as in Example 1 except that the positive electrode active material was prepared by mixing carbon nanotubes instead of the graphite particulates with the core particles in the preparation of the positive electrode active material.

### Evaluation Example 1: Electron Microscope Image Analysis of Positive Electrode Active Material

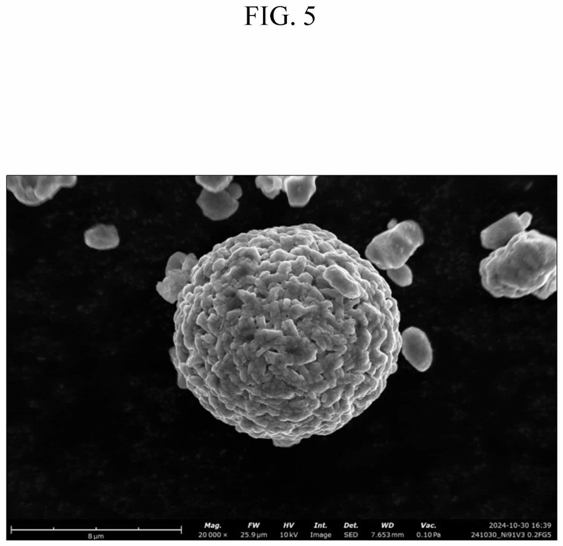

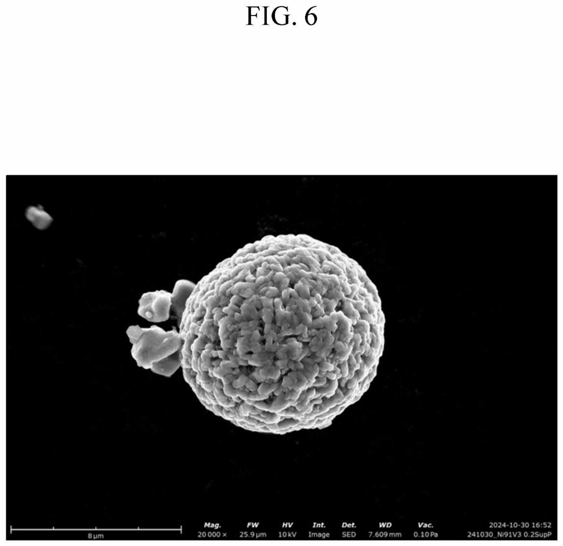

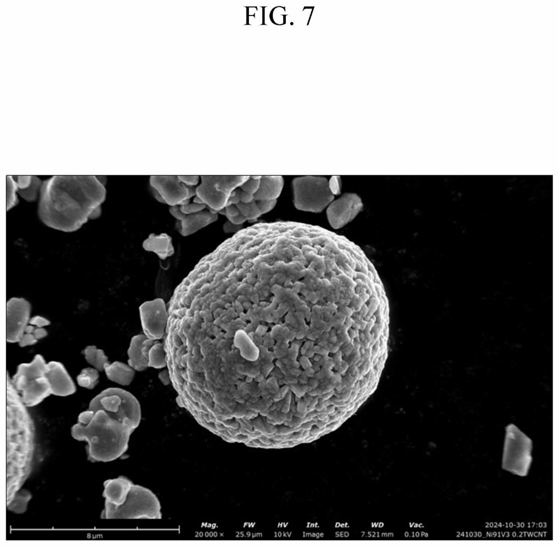

An SEM image of the positive electrode active materials of Example 1 is shown in FIG. 5, an SEM image of Comparative Example 3 in shown in FIG. 6, and an SEM image of Comparative Example 4 is shown in FIG. 7.

Referring to FIG. 5, the positive electrode active material of Example 1 had a carbon coating layer with a layered structure formed on the surfaces of a core particles, and the carbon coating layer was also formed on the surfaces of primary particles of the core particles. The carbon coating layer was very thin, uniformly thick, and surrounded the surfaces of the core particles.

Meanwhile, referring to FIGS. 6 and 7, Comparative Examples 3 and 4 having carbon coating layers derived from carbon black and carbon nanotubes were non-uniform on the core particle surfaces or partially agglomerated on portions of the core particle surfaces.

Further, cross-sections of the positive electrode active materials of Examples 1 to 4 were observed via transmission electron microscopy (TEM). The results confirmed that coating layers comprising graphene having a layered structure of two or more layers was formed on each of the positive electrode active materials.

### Evaluation Example 2: SEM Image Analysis of Positive Electrode

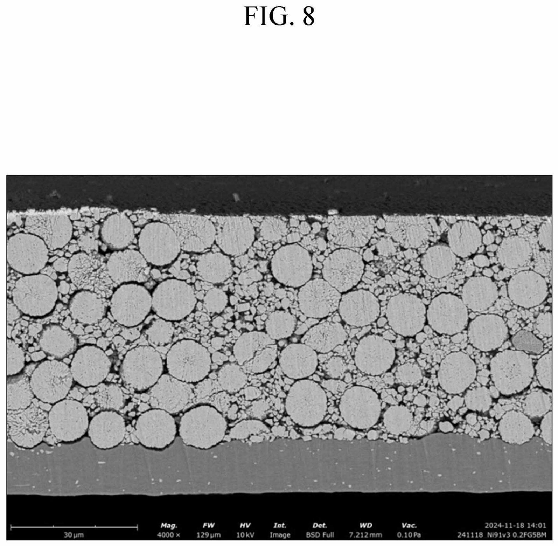

SEM image of the positive electrodes of Examples 1 and 2 and Comparative Examples 1 to 4 were taken and shown in FIGS. 8 to 13.

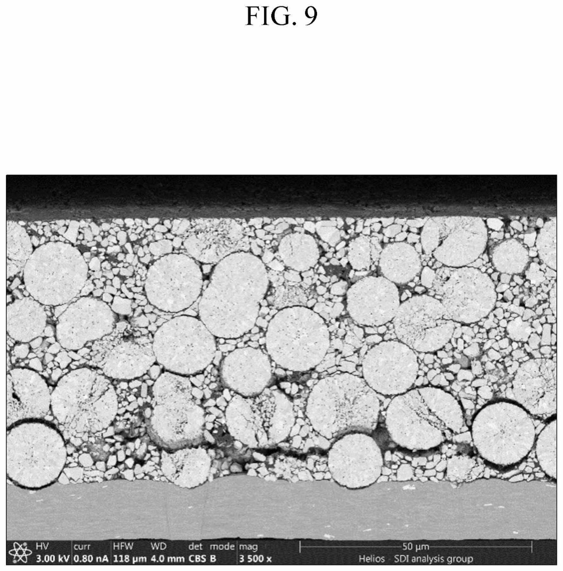

Example 1, shown in FIG. 8, and Example 2, shown in FIG. 9, had minimal cracks in the active material particles as a result of the compression process. In particular, Example 2 had less cracks than Example 1. In other words, it can be seen that particle strength of the positive electrode active material was maximized by controlling an amount of the carbon coating layer.

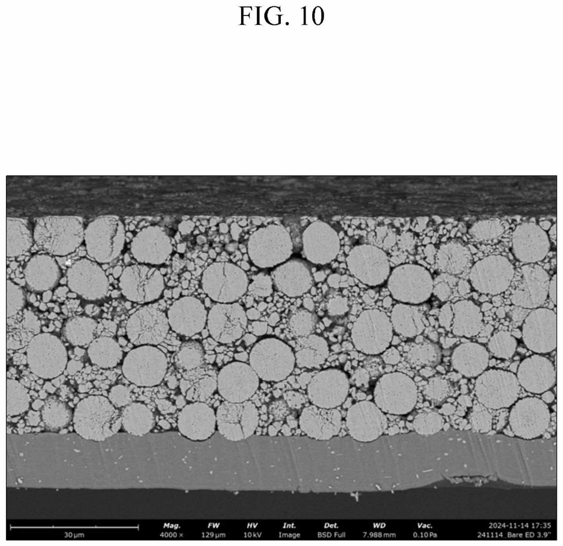

Meanwhile, Comparative Example 1 shown in FIG. 10, exhibited a large number of cracks of the active material particles as compared to Examples 1 and 2. In other words, as the positive electrode active materials of Examples 1 and 2 included the carbon coating layer that improved particle strength, less cracks occurred as a result of the compression process.

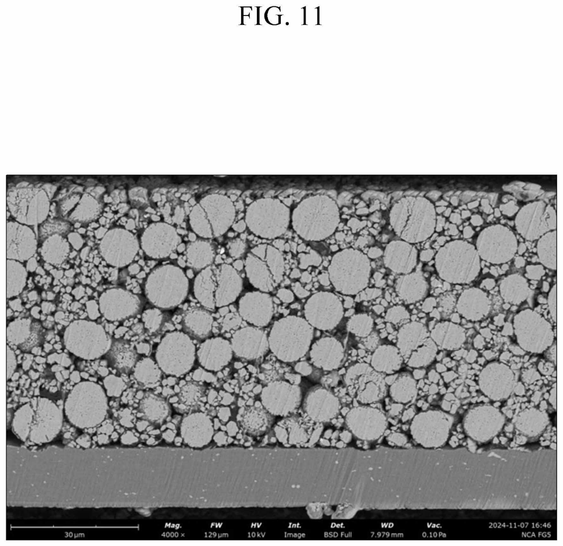

Referring to FIG. 11, the active material particles of Comparative Example 2, which had a carbon coating layer derived from a plate-like carbon material with a large average particle diameter, exhibited a large number of the cracks compared to Examples 1 and 2. In other words, it can be seen that particle strength of the positive electrode active material was maximized by controlling an average particle diameter of the carbon material.

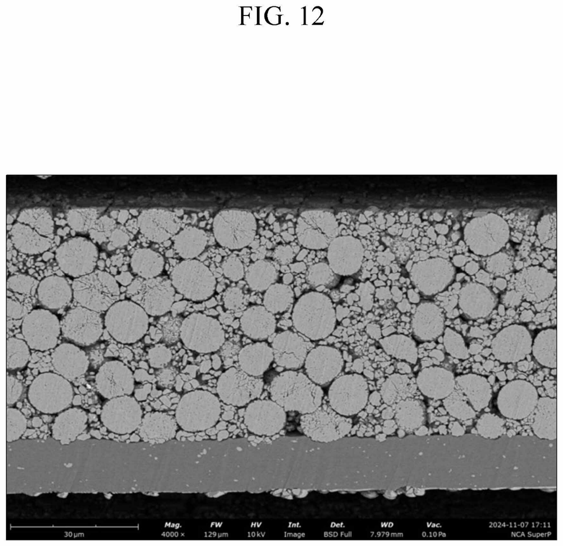

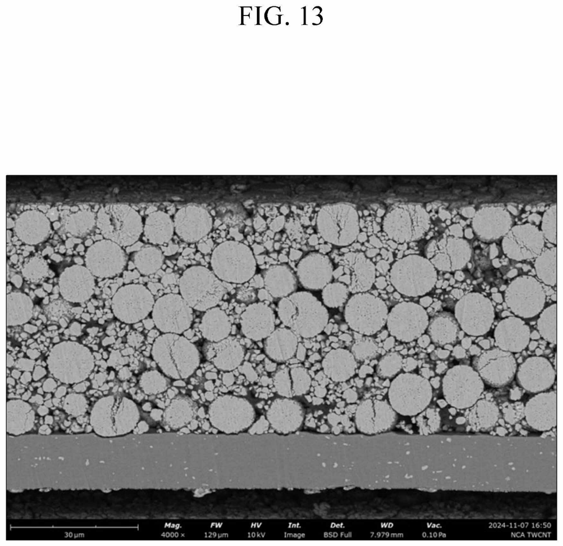

Comparative Example 3, shown in FIG. 12, and Comparative Example 4, shown in FIG. 13, both of which had carbon coating layers derived from carbon black, a carbon material with a zero-dimensional structure, and carbon nanotube, a carbon material with a one-dimensional structure, exhibited a large number of cracks of the active material particles compared to Examples 1 and 2. Thus, it can be seen that particle strength of the positive electrode active material was maximized by controlling types of a plate-like carbon material.

### Evaluation Example 3: Analysis of Physical Properties of Positive Electrode Active Material

The particle strength of positive electrode active materials of the examples and the comparative examples was analyzed, and the results are shown in Table 1 below. The specific evaluation method was as follows.

The active material particles were placed on a plate and then compressed by increasing a compression force with a micro compression testing machine (MCT-W500 by Shimadzu Corp.). Here, a force at which particles were broken was measured, and the particle strength of the active material particles was obtained by averaging the particle strengths of total 20 particles.

### Evaluation Example 4: Analysis of Physical Properties of Positive Electrode

The positive electrodes of the examples and the comparative examples were analyzed with respect to density of the positive electrode active material layers, and the results are shown in Table 1 below. The specific evaluation method was as follows.

Each of the positive electrode active material layers excluding the positive electrode current collector was measured with respect to cross-sectional area, thickness, and weight. Subsequently, the cross-sectional area was multiplied by the thickness to calculate a volume, and the weight was divided by the volume to calculate density of each positive electrode active material layer.

**Table 1**

| | Amount of core particles (wt%) | Amount of plate-like carbon material (wt%) | Type of plate-like carbon material | Particle strength of positive electrode active material (MPa) | Density of positive electrode active material layer (g/cc) |
|---|---|---|---|---|---|
| Example 1 | 99.8 | 0.2 | graphite (0.2 µm) | 165 | 3.87 |
| Example 2 | 99.5 | 0.5 | graphite (0.2 µm) | 179 | 3.89 |
| Example 3 | 99.0 | 1.0 | graphite (0.2 µm) | 183 | 3.92 |
| Example 4 | 98.0 | 2.0 | graphite (0.2 µm) | 185 | 3.93 |
| Comparative Example 1 | 100.0 | - | - | 140 | 3.78 |
| Comparative Example 2 | 99.8 | 0.2 | graphite (5.0 µm) | 153 | 3.80 |
| Comparative Example 3 | 99.8 | 0.2 | carbon black | 155 | 3.79 |
| Comparative Example 4 | 99.8 | 0.2 | CNT | 146 | 3.80 |

Referring to Table 1, Examples 1 to 4 had particle strengths of 165 MPa to 185 MPa. Thus, Examples 1 to 4 were confirmed to have high particle strength.

Examples 1 to 4 had densities of 3.87 g/cc to 3.93 g/cc. In other words, in Examples 1 to 4 where the positive electrode active materials had high particle strength, the mixture densities of an electrode plates were increased.

On the other hand, in Comparative Example 1, where no carbon coating layer on the surfaces of the core particles and thus lower particle strength than Examples 1 to 4, the density of the positive electrode active material layer was reduced. In Comparative Example 2, which had a plate-like carbon material with a larger average particle diameter than Example 1, particle strength of the active material and density of the positive electrode active material layer were lower than Example 1. Comparative Examples 3 and 4, where carbon coating layers were derived from carbon black and carbon nanotubes, had lower particle strength than Example 1, and accordingly, density of the positive electrode active material layer was lower.

### Evaluation Example 5: Performance Analysis of Rechargeable Lithium Battery Cell

The rechargeable lithium battery cells of the examples were analyzed with respect to initial discharge capacity and a capacity retention rate (cycle-life characteristics), and the results are shown in Table 2 below. The evaluation method was as follows.

### (1) Initial discharge capacity

The rechargeable lithium battery cells were charged under constant current (0.2 C) and constant voltage (4.3 V, 0.05 C cut-off) conditions, paused for 10 minutes, and discharged to 3.0 V under the constant current (0.2 C) condition at 25 °C for initial charge and discharge. The initial discharge capacity of the cells was measured.

### (2) Capacity retention rate

After the initial charge and discharge, the cells were charged and discharged 50 times under 0.33 C/1 C conditions at 25 °C to measure discharge capacity at the 50^{th} cycle. A ratio of the discharge capacity at the 50^{th} cycle to the discharge capacity at the 1^{st} cycle was calculated and indicated as a capacity retention rate (cycle-life characteristics).

**Table 2**

| | Amount of core particles (wt%) | Amount of plate-like carbon material (wt%) | Type of plate-like carbon material | Initial discharge capacity (mAh/g) | Capacity retention rate (%) |
|---|---|---|---|---|---|
| Example 1 | 99.8 | 0.2 | graphite (0.2 µm) | 213.7 | 95.9 |
| Example 2 | 99.5 | 0.5 | graphite (0.2 µm) | 213.6 | 95.7 |
| Example 3 | 99.0 | 1.0 | graphite (0.2 µm) | 213.3 | 95.6 |
| Example 4 | 98.0 | 2.0 | graphite (0.2 µm) | 213.1 | 94.8 |
| Comparative Example 1 | 100.0 | - | - | 214.1 | 91.8 |
| Comparative Example 2 | 99.8 | 0.2 | graphite (5.0 µm) | 213.6 | 92.7 |
| Comparative Example 3 | 99.8 | 0.2 | carbon black | 213.5 | 92.5 |
| Comparative Example 4 | 99.8 | 0.2 | CNT | 214.1 | 93.1 |

Referring to Table 2, Examples 1 to 4 had an initial discharge capacity of 213.1 mAh/g to 213.7 mAh/g and a capacity retention rate of 94.8% to 95.9%. In particular, Examples 1 to 3 were confirmed to exhibit higher capacity and a higher capacity retention rate than Example 4. In other words, it can be seen that as an amount of a carbon coating layer was controlled, the capacity and cycle-life characteristics were improved. On the other hand, Comparative Examples 1 to 4 exhibited a reduced capacity retention rate and deteriorated cycle-life characteristics as compared to Examples 1 to 4.

While the present disclosure has been described in connection with what is presently considered to be practical example embodiments, it is to be understood that the present disclosure is not limited to the disclosed embodiments. Rather, to the present disclosure includes various modifications and equivalent arrangements.

### <Description of Symbols>

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material comprising
core particles that include a lithium transition metal composite oxide and are in a form of secondary particles that are agglomerations of primary particles; and
a carbon coating layer on surfaces of the core particles;
wherein the positive electrode active material has a particle strength of greater than or equal to 160 MPa, preferably wherein a particle strength of the positive electrode active material is 160 MPa to 190 MPa.

2. The positive electrode active material as claimed in claim 1, wherein the carbon coating layer comprises graphene with a layered structure of 50 layers or less.

3. The positive electrode active material as claimed in claim 2, wherein the graphene is derived from a plate-like carbon material.

4. The positive electrode active material as claimed in claim 3, wherein the plate-like carbon material comprises graphene, graphite, or a combination thereof.

5. The positive electrode active material as claimed in claim 3 or 4, wherein an average size (D₅₀) of particles of the plate-like carbon material is less than or equal to 2.5 µm, preferably wherein an average size (D₅₀) of particles of the plate-like carbon material is 50 nm to 900 nm.

6. The positive electrode active material as claimed in any of claims 3-5, wherein a thickness of the carbon coating layer is 2 nm to 500 nm; and/or
wherein a thickness of the plate-like carbon material is 5 nm to 100 nm.

7. The positive electrode active material as claimed in any of claims 1-6, wherein the carbon coating layer is in a form of a continuous film or in a form of island.

8. The positive electrode active material as claimed in any of claims 1-7, wherein the carbon coating layer has a ratio (I_{D}/I_{G}) of the peak intensity (I_{D}) around 1350 cm⁻¹ to the peak intensity (I_{G}) around 1580 cm⁻¹ in a Raman spectrum of 0.15 to 0.50.

9. The positive electrode active material as claimed in any of claims 1-8, wherein the carbon coating layer is included in an amount of 0.1 wt% to 5.0 wt% based on 100 wt% of the positive electrode active material,
preferably wherein the carbon coating layer is included in an amount of 0.2 wt% to 1.0 wt% based on 100 wt% of the positive electrode active material.

10. The positive electrode active material as claimed in any of claims 1-9,
wherein the lithium transition metal composite oxide of the core particles is a lithium nickel-based composite oxide represented by:
Liₐ₁Niₓ₁M¹_{y1}M²_{z1}O_{2-b1}X_{b1}
wherein 0.9≤a1≤1.2, 0.3≤x1<1, 0<y1≤0.7, 0≤z1≤0.7, 0.9≤x1+y1+z1≤1.1, and 0≤b1≤0.1, M¹ and M² are each independently one or more of Al, B, Ba, Ca, Ce, Co, Cr, Cu, Fe, Mg, Mn, Mo, Nb, Si, Sn, Sr, Ti, V, Y, W, and Zr, and X is one or more of F, P, and S.

11. The positive electrode active material as claimed in any of claims 1-10, wherein an average particle diameter (D₅₀) of the secondary particles is 6 µm to 25 µm, and the average particle diameter (D₅₀) of the primary particles is 10 nm to 1 µm.

12. A positive electrode comprising
a current collector, and
a positive electrode active material layer disposed on the current collector and including the positive electrode active material as claimed in any of claims 1-11,
wherein the positive electrode active material as claimed in any of claims 1-11 is a first positive electrode active material,
preferably wherein a density of the positive electrode active material layer is 3.3 g/cc to 5.0 g/cc.

13. The positive electrode as claimed in claim 12, wherein the positive electrode active material layer further comprises a second positive electrode active material including a lithium transition metal composite oxide, and
wherein an average particle diameter (D₅₀) of the first positive electrode active material is 6 µm to 25 µm and an average particle diameter (D₅₀) of the second positive electrode active material is 1 µm to 8 µm.

14. The positive electrode as claimed in claim 12 or 13, wherein the second positive electrode active material is a lithium nickel-based composite oxide represented by:
Liₐ₁Niₓ₁M¹_{y1}M²_{z1}O_{2-b1}X_{b1}
wherein 0.9≤a1≤1.2, 0.3≤x1<1, 0<y1≤0.7, 0≤z1≤0.7, 0.9≤x1+y1+z1≤1.1, and 0≤b1≤0.1, M¹ and M² are each independently one or more of Al, B, Ba, Ca, Ce, Co, Cr, Cu, Fe, Mg, Mn, Mo, Nb, Si, Sn, Sr, Ti, V, Y, W, and Zr, and X is one or more of F, P, and S.

15. A rechargeable lithium battery comprising
the positive electrode as claimed in any of claims 12-14;
a negative electrode; and
an electrolyte.
